Europäisches Patentamt

European Patent Office

Office européen des brevets

(19)

(11) Veröffentlichungsnummer : **0 314 674 B1**

(12) **EUROPÄISCHE PATENTSCHRIFT**

(45) Veröffentlichungstag der Patentschrift :
**22.01.92 Patentblatt 92/04**

(51) Int. Cl.$^5$ : **B60H 1/00**

(21) Anmeldenummer : **87903264.7**

(22) Anmeldetag : **04.06.87**

(86) Internationale Anmeldenummer :
**PCT/DE87/00255**

(87) Internationale Veröffentlichungsnummer :
**WO 88/00536 28.01.88 Gazette 88/03**

(54) **HEIZ- UND/ODER KLIMAANLAGE FÜR KRAFTFAHRZEUGE.**

(30) Priorität : **17.07.86 DE 3624171**

(43) Veröffentlichungstag der Anmeldung :
**10.05.89 Patentblatt 89/19**

(45) Bekanntmachung des Hinweises auf die
Patenterteilung :
**22.01.92 Patentblatt 92/04**

(84) Benannte Vertragsstaaten :
**DE FR IT**

(56) Entgegenhaltungen :
**EP-A- 0 179 625**
**DE-A- 2 952 210**
**US-A- 4 424 933**
**US-A- 4 456 055**

(56) Entgegenhaltungen :
**Patent Abstracts of Japan, vol. 10, No. 14
(M-477)(2071), 21 January 1986, see abstract
Patent Abstracts of Japan, vol. 8, No.280
(M-347)(1717), 21 Decemder 1984, see abstract
Patent Abstracts of Japan, vol.10, No. 118
(M-475)(2175), 02 May 1986**

(73) Patentinhaber : **ROBERT BOSCH GMBH
Postfach 50
W-7000 Stuttgart 1 (DE)**

(72) Erfinder : **FEDTER, Horst
Wiedenbachweg 14
W-7582 Bühlertal (DE)**
Erfinder : **GRÜNWALD, Werner
Robert-Schumann-Str. 21
W-7016 Gerlingen (DE)**
Erfinder : **NOLTING, Peter
Scheffelweg 24
W-7582 Bühlertal (DE)**

EP 0 314 674 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Stand der Technik

Die Erfindung geht aus von einer Heiz- und/oder Klimaanlage für Kraftfahrzeuge nach der Gattung des Hauptanspruchs. Eine derartige Anlage ist beispielsweise aus der JP-A-59-149 809 (Patent abstracts of Japan, Vol. 8, No. 280, N-347 (1717)) bekannt, die einen im Innenraum angeordneten Temperatur- und Feuchtesensor und einen im Außenbereich vorgesehenen Temperatursensor enthält. Die Anlage enthält weiterhin einen Außenluft-Ansaugkanal sowie Ausströmkanäle im Innenraum, wobei ein Ausströmkanal in Scheibennähe mündet. Ein Steuergerät steuert in Abhängigkeit der von den Sensoren abgegebenen Signale ein vorhandenes Gebläse sowie die Aufteilung der Luft auf die Kanäle.

Aus der EP-A-0 179 625 ist eine Klimaanlage für Kraftfahrzeuge bekannt, deren Regeleinrichtung von der Zustandsbeschreibung der zu regelnden Strecke ausgeht. Die zu regelnden Größen der Regelstrecke werden mit den von einem Beobachter ermittelnden Werten verglichen und die Abweichungen einem Regler zugeführt. Als Sensoren sind ein im Innenraum angeordneter Temperaturfühler sowie wenigstens eine im Außenbereich des Kraftfahrzeugs angeordneter weiterer Fühler vorgesehen. Der weitere Fühler ist beispielsweise als Solarstrahlungs-, Feuchtigkeit-, Fahrzeuggeschwindigkeits- oder Feuchtesensor ausgestaltet.

Der Erfindung liegt die Aufgabe zugrunde, eine Heiz- und/oder Klimaanlage derart weiterzubilden, daß ein frühes Erkennen einer Beschlagsbildung auf den Innenscheiben eines Kraftfahrzeugs durch Taupunktunterschreitung möglich ist und Gegenmaßnahmen einleitbar sind.

Die Aufgabe wird durch die im Hauptanspruch angegebenen Merkmale gelöst.

Vorteile der Erfindung

Die erfindungsgemäße Heiz- und/oder Klimaanlage für Kraftfahrzeuge mit einem Feuchte- und Temperatursensor im Innenraum sowie einem Feuchte- und Temperatursensor im Außenraum in Verbindung mit einem Strahlungssensor und/oder einem Geschwindigkeitssensor bringt eine Verbesserung bei der Erkennung einer drohenden Beschlagsbildung auf den Kraftfahrzeugscheiben, weil Einflußgrößen bereits gemessen werden können, bevor sie ihre negative Wirkung entfalten. Eine Regelgerät steuert in Abhängigkeit von einem Zusammenhang zwischen relativer Luftfeuchtigkeit, Temperatur- und Taupunktunterschreitung, der in Form einer Tabelle in einer signalverarbeitenden Anordnung im Regelgerät abgelegt ist, ein vorhandenes Gebläse, die Heiz- und/oder Kühlvorrichtung sowie die Aufteilung der Luft auf verschiedene luftführende Kanäle in Abhängigkeit der von den Sensoren abgegebenen Signale derart, daß einer Taupunktunterschreitung auf der Innenseite der Scheibe entgegengewirkt wird.

Der im Außenbereich angeordnete Sensor zur Erfassung der relativen Luftfeuchtigkeit bringt weiterhin den Vorteil mit sich, daß das Ansaugen und Einblasen eines feuchtkalten Luftstroms in den Fahrgast-Innenraum vermieden werden kann.

Durch die in den Unteransprüchen aufgeführten Maßnahmen sind vorteilhafte Weiterbildung der im Hauptanspruch angegebenen Heiz- und/oder Klimaanlage möglich.

Ein besonders guter Wärmeaustausch zwischen der Außenluft und dem im Außenbereich angeordneten Temperaturfühler sowie eine genaue Erfassung der relativen Luftfeuchtigkeit im Außenbereich ist dadurch möglich, daß der Außenbereich Temperatur- und/oder Feuchtesensor in einem Außenluft-Ansaugkanal der Anlage angeordnet ist. Die Anordnung eines weiteren Temperatur- und/oder Feuchtesensors in Scheibennähe ermöglicht eine noch genauere Erkennung einer beginnenden Taupunktunterschreitung, die ein Beschlagen der Scheibe zur Folge hätte.

Weitere vorteilhafte Weiterbildungen und Verbesserungen der erfindungsgemäßen Heiz- und/oder Klimaanlage ergeben sich aus weiteren Unteransprüchen in Verbindung mit der folgenden Beschreibung.

Zeichnung

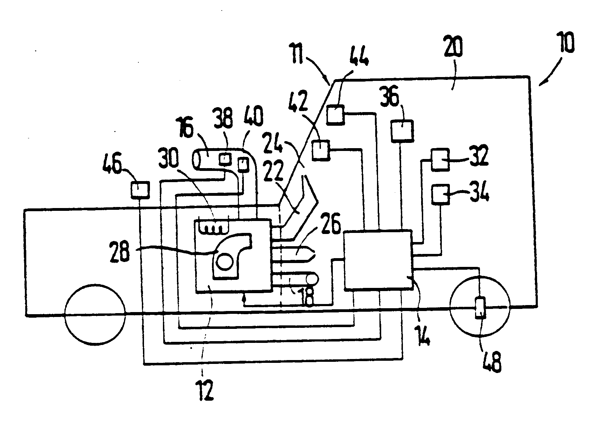

Die Figur zeigt eine in einem Kraftfahrzeug eingebaute Heiz- und/ oder klimaanlage mit einem der Klimaanlage zugeordneten Regelgerät.

Beschreibung des Ausführungsbeispieles

Die Figur zeigt eine in einem Kraftfahrzeug 10 angeordnete Heiz- und/oder Klimaanlage 12, der ein Regelgerät 14 zugeordnet ist. Die Luftansaugung erfolgt durch einen ersten Ansaugkanal 16, der im Freien mündet, sowie durch einen zweiten Ansaugkanal 18, der im Innenraum 20 des Kraftfahrzeugs 10 mündet. Es sind wenigstens zwei Innenraumbelüftungskanäle vorgesehen, von denen ein erster Belüftungs-kanal 22 in Scheibennähe 24 einer Scheibe 11, und ein zweiter Belüftungskanal 26 im Innenraum 20 mündet. Eine Luftströmung in den Kanälen 16, 18, 22, 26 entsteht durch Staudruck während der Fahrt oder durch ein Gebläse 28 der Anlage 12. Falls erforderlich, übernimmt eine Heizung oder Kühlung 30 eine Beheizung bzw. Kühlung der in den Innenraum 20 abgegebenen Luft. Die Anlage 12 wird von dem Regelgerät 14 gesteuert bzw. geregelt. Das Regelgerät 14 bestimmt darüber, ob das Gebläse 28 und/oder die Heizung/Kühlung 30 eingeschaltet werden, ob über den ersten Ansaugkanal 16 Außenluft oder über den zweiten Ansaugkanal 18 Innenraumluft angesaugt werden soll und darüber, ob die Belüftung über den ersten Belüftungskanal 22 und/oder den zweiten Belüftungskanal 26 erfolgen soll. Das Regelgerät 14 erhält zur Durchführung der Regelaufgabe das Signal mehrerer Sensoren zugeführt.

Im Innenraum 20 ist ein erster Temperatursensor 32 und ein erster Feuchtesensor 34 angeordnet. Mit diesen beiden Sensoren 32, 34 ist bereits eine Raumklima-Regelung auf einen behaglichen Wert möglich. Zunächst wird über eine Eingabevorrichtung 36 eine Wunschtemperatur eingegeben. Prinzipiell könnte auch die Vorgabe einer gewünschten relativen Luftfeuchtigkeit vorgesehen werden. Ohne genaue Kenntnis des Zusammenhangs zwischen Temperatur und relativer Luftfeuchtigkeit für ein behagliches Klima sind bei dieser Betriebsweise Bedienungsfehler jedoch nicht auszuschließen. Es ist deshalb sweckmäßiger, wenn das Regelgerät 14 einen zulässigen Bereich für die relative Luftfeuchtigkeit als Funktion der eingegebenen Temperatur selbständig festlegen kann. Dieser Zusammenhang kann beispielsweise aus der Fachzeitschrift "Gesundheitsingenieur", Vol. 89, Heft 10, Seite 301-308, 1986 entnommen werden. Die empirisch gefundenen Beziehungen zwischen der Temperatur und der relativen Luftfeuchtigkeit für ein behagliches Klima sind als Tabelle in einer signalverarbeitenden Einheit innerhalb des Regelgerätes 14 abgespeichert. Da einer bestimmten Temperatur ein Wertebereich der relativen Luftfeuchtigkeit für ein behagliches Klima zugeordnet ist, wird in Abhängigkeit von der gemessenen Luftfeuchtigkeit der jenige Wert der einzuregelnden relativen Luftfeuchtigkeit festgelegt, der mit geringstem Energie-aufwand der Anlage 12 erreicht werden kann.

Eine Möglichkeit zur Regelung bei steigender Luftfeuchtigkeit besteht darin, die Raumtemperatur innerhalb eines Toleranzbandes, das der Bedienender noch akzeptiert, abzusenken. Eine zweite Möglichkeit besteht dann darin, daß bei gleichbleibender Temperatur die Luftfeuchtigkeit im Umluftbetrieb gesenkt wird. Dazu saugt die Anlage 12 mit dem im Innenraum 20 mündenden zweiten Ansaugkanal 18 die Innenluft ein, entfeuchtet sie und gibt sie über den ersten Belüftungskanal 22 und/oder den zweiten Belüftungskanal 26 wieder in den Innenraum 20 ab. Eine dritte Möglichkeit besteht darin, daß der Innenluft zusätzliche Außenluft zugemischt wird. Hierbei ist es zweckmäßig, die Temperatur der Außenluft mit einem zweiten Temperatursensor 38 und die Luftfeuchtigkeit der Außenluft mit einem zweiten Feuchtesensor 40 zu messen sowie erforderlichenfalls eine Heizung 30 bzw. Kühlung und/oder Entfeuchtung der angesaugten Luft in der Anlage 12 vorzunehmen. Besonders günstig ist es, den zweiten Temperatursensor 38 und den zweiten Feuchtesensor 40 im ersten Ansaugkanal 16 anzubringen. Die beiden Sensoren 38, 40 können jedoch auch an anderer, geeigneter Stelle im Außenraum angebracht sein. Im Umluftbetrieb übernimmt das Gebläse 28 die Luftumwälzung. Im Fahrbetrieb kann bereits des Staudruck für die Luftzumischung ausreichend sein.

Neben der Beeinflussung des Innenraumklimas in Abhängigkeit von der Temperatur und der relativen Luftfeuchtigkeit kann die Heiz- und/oder Klimaanlage auch zum Erkennen einer möglichen oder bereits existierenden Beschlagbildung an den Scheibeninnenseiten und Einleiten entsprechender Gegenmaßnahmen herangezogen werden. Zur Durchführung dieser Aufgabe sind der erste Belüftungskanal 22, ein dritter Temperatursensor 42, ein dritter Feuchtesensor 44, ein Strahlungssensor 46 und ein Geschwindigkeitssensor 48 vorgesehen.

Die Luft dann Feuchtigkeit als Wasserdampf gelöst bis zu einer Menge aufnehmen, die von der Temperatur abhängt. Je wärmer die Luft ist, desto größer ist die Aufnahmefähigkeit. Kühlt die im Innenraum 20 eingeschlossene Luft ab, kann der Sättigungspunkt, der Taupunkt, unterschritten werden. Auf abgekühlten Oberflächen kondensiert Wasser. Dieser Effekt macht sich besonders störend auf den Innenflächen der Scheiben 11 bemerkbar.

Der Zusammenhang zwischen relativer Luftfeuchtigkeit, Temperatur und Taupunktunterschreitung ist in einer Tabelle in der Signalverarbeitenden Anordnung in dem Regelgerät 14 abgelegt. Bereits mit den beiden Sensoren 42, 44, die in Scheibennähe 24 angeordnet sind, ist eine bevorstehende oder bereits eingetretene Taupunktunterschreitung erkennbar.

Eine Taupunktunterschreitung kann durch Gegenmaßnahmen verhindert werden. Als erste Maßnahme wird das Gebläse 28 eingeschaltet, das über den ersten Belüftungskanal 22, der in Scheibennähe 24 mündet, einen Luftstrom an den Scheiben 11 vorbeibläst. Wird die Scheibenbelüftung im Umluftbetrieb vorgenommen, so wird eine Heizung 30 der umgewälzten Luft und/oder eine Entfeuchtung erforderlich sein. Nur die erwärmte Luft vermag eine höhere Wasserdampfmenge aufzunehmen. Auf die Heizung 30 kann verzichtet werden, wenn über den ersten Ansaugkanal 16 Außenluft angesaugt wird und über den ersten Belüftungskanal 22 in den Innenraum eingeblasen wird. Auch dann, wenn die Außenluft eine relative Luftfeuchtigkeit von nahezu 100 % aufweist, ergibt sich eine Antibeschlagwirdung, wenn die Innenraumtemperatur nur um wenige Grad höher liegt

EP 0 314 674 B1

als die Außentemperatur. Gegebenenfalls ist mit Hilfe des zweiten Temperatursensors 38 und des zweiten Feuchtesensors 40, die im ersten Ansaugkanal 16 angeordnet sind, eine Vorbehandlung der angesaugten Luft in der Anlage 12 möglich.

Der dritte Temperaturfühler 42 in Scheibennähe 24 kann entfallen bei Ermittlung der Scheibentemperatur aus einer Korrelation zwischen Außen- und Innenraumtemperatur. In diesem Falle ist der zweite Temperatursensor 38 erforderlich. Dieser Sensor ist, wie bereits beschrieben im ersten Ansaugkanal 16 oder an einer anderen, geeigneten Stelle im Außenraum angeordnet. Der Rückschluß auf die Scheibentemperatur aus der Messung von Außen- und Innenraumtemperatur wird verbessert, wenn die eingestrahlte Wärme Berücksichtigung findet. Die Strahlung erfaßt der Strahlungssensor 46, der an einer nach oben freien Fläche des Kraftfahrzeugs 10 montiert sein muß. Eine zusätzliche Verbesserung der Scheibentemperatur-Schätzung ist durch die Erfassung der Fahrgeschwindigkeit mit dem Geschwindigkeitssensor 48 möglich. Dieser Sensor ist zumeist ohnehin vorhanden. Eine zunehmende Fahrgeschwindigkeit erhöht den Luftaustausch auf der äußeren Oberfläche der Scheiben 11 und führt damit zu einer Angleichung der äußeren Oberflächentemperatur der Scheiben 11 an die Außentemperatur. Ist beispielsweise die Außentemperatur geringer als die Innenraumtemperatur, dann sinkt mit zunehmender Fahrgeschwindigkeit die Scheibentemperatur ab und die Gefahr einer Taupunktunterschreitung erhöht sich in gleichem Maße. Die erforderlichen Gegenmaßnahmen zur Vermeidung einer Taupunktunterschreitung auf den Scheiben 11 können somit rechtzeitig eingeleitet werden.

## Patentansprüche

1. Heiz- und/oder Klimaanlage für Kraftfahrzeuge (10),
   – mit wenigstens einem ersten, im Innenraum (20) des Kraftfahrzeugs (10) angeordneten Temperatur- und Feuchtesensor (32, 34), mit wenigstens einem zweiten, im Außenbereich des Kraftfahrzeugs (10) angeordneten Temperatursensor (38),
   – mit einer Heiz- und/oder Kühlvorrichtung (30),
   – mit einem Außenluft- und einem Innenluftansaugkanal (16, 18),
   – mit einem im Innenraum (20) des Kraftfahrzeug (10) in Scheibennähe (24) mündenden Ausströmkanal (22),
   – mit einem Gebläse (28) und
   – mit einem Regelgerät (14), dadurch gekennzeichnet, daß ein im Außenbereich des Kraftfahrzeugs (10) angeordneter Feuchtesensor (40) zum Erfassen der relativen Luftfeuchtigkeit sowie
   – ein Strahlungssensor (46) und/oder
   – ein Fahrzeuggeschwindigkeitssensor (48) vorgesehen sind,
   – daß der Zusammenhang zwischen relativer Luftfeuchtigkeit, Temperatur und Taupunktunterscheidung in einer Tabelle in einer signalverarbeitenden Anordnung des Regelgeräts (14) abgelegt ist und
   – daß das Regelgerät (14) das Gebläse (28), die Heiz- und/oder Kühlvorrichtung (30) sowie die Aufteilung der Luft auf die Kanäle (16, 18, 22) in Abhängigkeit von den Signalen, die von den Sensoren (32, 34, 38, 40, 46, 48) abgegeben werden, derart steuert, daß einer Taupunktunterscheidung auf der Innenseite einer Scheibe (11) des Kraftfahrzeugs (10) entgegengewirkt wird.

2. Heiz- und/oder Klimaanlage nach Anspruch 1, dadurch gekennzeichnet, daß der zweite Temperatursensor (38) im Außenluft-Ansaugkanal (16) angeordnet ist.

3. Heiz- und/oder Klimaanlage nach Anspruch 1 oder 2, dadurch gekennzeichnet, daß der zweite Feuchtesensor (40) im Außenluft-Ansaugkanal (16) angeordnet ist.

4. Heiz- und/oder Klimaanlage nach einem der vorhergehenden Ansprüche, bei der wenigstens ein dritter Feuchtesensor (44) in Scheibennähe (24) angeordnet ist.

5. Heiz- und/oder Klimaanlage nach einem der vorhergehenden Ansprüche, bei der wenigstens ein dritter Temperatursensor (42) in Scheibennähe (24) angeordnet ist.

6. Heiz- und/oder Klimaanlage nach einem der vorhergehenden Ansprüche, bei der das Steuergerät (14) der Heiz- und/oder Klimaanlage mit einer Eingabevorrichtung (36) verbunden ist, mit der Soll-Temperaturen und Sollwerte der relativen Luftfeuchtigkeit im Innenraum vorgebbar sind.

## Claims

1. Heating and/or air-conditioning system for motor vehicles (10),
   – having at least one first temperature and humidity sensor (32, 34) arranged in the passenger compartment (20) of the motor vehicle (10), having at least a second temperature sensor (38) arranged in the exter-

4

nal area of the motor vehicle (10),
– having a heating and/or cooling device (30),
– having an external-air intake channel and an internal-air intake channel (16, 18),
– having an outlet channel (22) opening in the passenger compartment (20) of the motor vehicle (10) near to a window (24),
– having a blower (28) and
– having a control unit (14), characterised in that a humidity sensor (40), arranged in the external area of the motor vehicle (10), for detecting the relative humidity and
– a radiation sensor (46) and/or
– a vehicle speed sensor (48) are provided,
– in that the relationship between relative humidity, temperature and dew point differentiation is stored in a table in a signal-processing arrangement of the control unit (14) and
– in that the control unit (14) controls the blower (28), the heating and/or cooling device (30) and the distribution of the air to the channels (16, 18, 22) as a function of the signals, which are issued by the sensors (32, 34, 38, 40, 46, 48), in such a way that a dew point differentiation on the inside of a window pane (11) of the motor vehicle (10) is counteracted.

2. Heating and/or air-conditioning system according to Claim 1, characterised in that the second temperature sensor (38) is arranged in the external-air intake channel (16).

3. Heating and/or air-conditioning system according to Claim 1 or 2, characterised in that the second humidity sensor (40) is arranged in the external-air intake channel (16).

4. Heating and/or air-conditioning system according to one of the preceding claims, in which at least a third humidity sensor (44) is arranged in the vicinity of the window pane (24).

5. Heating and/or air-conditioning system according to one of the preceding claims, in which at least a third temperature sensor (42) is arranged in the vicinity of the window pane (24).

6. Heating and/or air-conditioning system according to one of the preceding claims, in which the control unit (14) of the heating and/or air-conditioning system is connected to an input device (36), with which desired temperatures and desired values of the relative humidity in the passenger compartment can be prescribed.


## Revendications

1. Installation de chauffage et/ou de climatisation pour véhicules automobiles (10),
– comportant au moins un premier capteur de température et d'humidité (32, 34) disposé dans l'habitacle (20) du véhicule (10), avec au moins un second capteur de température (38) disposé dans la zone extérieure du véhicule (10),
– un dispositif de chauffage et/ou de refroidissement (30),
– un canal d'aspiration d'air extérieur et/ou d'air intérieur (16, 18),
– un canal d'évacuation (22) débouchant dans l'habitacle, (20) du véhicule (10) à proximité (24) de la glace,
– un ventilateur (28),
– un appareil de régulation (14), installation caractérisée en ce que
– dans la zone extérieure du véhicule (10) il est disposé un capteur d'humidité (40) pour détecter l'humidité relative de l'air ainsi que,
– un capteur de rayonnement (46) et/ou,
– un capteur de vitesse (48) du véhicule,
– la relation entre l'humidité relative de l'air, la température et le dépassement vers le bas du point de rosée est déposée dans une table d'une installation de traitement de signaux de l'appareil de régulation (14) et,
– l'appareil de régulation (14) commande le ventilateur (28), le dispositif de chauffage et/ou de refroidissement (30) ainsi que la répartition de l'air entre les canaux (16, 18, 22) en fonction des signaux fournis par les capteurs (32, 34, 38, 40, 46, 48) de façon à s'opposer à un dépassement vers le bas du point de rosée sur la face intérieure d'une vitre (11) du véhicule (10).

2. Installation de chauffage et/ou de climatisation selon la revendication 1, caractérisée en ce que le second capteur de température (38) est disposé dans le canal d'aspiration d'air extérieur (16).

3. Installation de chauffage et/ou de climatisation selon la revendication 1 ou 2, caractérisée en ce que le second capteur d'humidité (40) est disposé dans le canal d'aspiration de l'air extérieur (16).

4. Installation de chauffage et/ou de climatisation selon l'une des revendications précédentes, caractérisée en ce qu'elle comporte au moins un troisième capteur d'humidité (44) situé à proximité de la vitre (24).

5. Installation de chauffage et/ou de climatisation selon l'une des revendications précédentes, caractérisée par au moins un troisième capteur de température (42) prévu à proximité de la vitre (24).

6. Installation de chauffage et/ou de climatisation selon l'une des revendications précédentes, caractérisée en ce que l'appareil de commande (14) est relié à l'installation de chauffage et/ou de climatisation par un dispositif d'entrée (36) qui permet de prédéterminer les températures de consigne et les valeurs de consigne de l'humidité relative de l'air dans l'habitacle.